(19) Europäisches Patentamt / European Patent Office / Office européen des brevets

(11) **EP 3 919 187 A1**

(12) **EUROPEAN PATENT APPLICATION**

(43) Date of publication:
08.12.2021 Bulletin 2021/49

(51) Int Cl.:
**B05D 5/00** (2006.01)          **B05D 5/06** (2006.01)
**B05D 7/00** (2006.01)          **B05D 7/14** (2006.01)

(21) Application number: 21180117.0

(22) Date of filing: 17.05.2017

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 19.05.2016  US 201662338719 P

(62) Document number(s) of the earlier application(s) in accordance with Art. 76 EPC:
**17729782.7 / 3 458 202**

(71) Applicant: **Valspar B.V.**
**8203 AC Lelystad (NL)**

(72) Inventor: **GOEDHART, Paul Marinus**
**Lelystad (NL)**

(74) Representative: **Vossius & Partner**
**Patentanwälte Rechtsanwälte mbB**
**Siebertstraße 3**
**81675 München (DE)**

Remarks:
This application was filed on 17-06-2021 as a divisional application to the application mentioned under INID code 62.

(54) **CANDY COLOR PAINT AND REFINISHING METHOD**

(57)     A candy color paint metallic finishing system comprising a colored liquid base coating composition comprising a colored metal oxide- coated nontransparent silver dollar aluminum flake pigment (507), and optionally one or more additional colored pigments (509) or dyes, dispersed in a first hardenable binder, wherein application of the base coating composition to a substrate provides a reflective colored layer (506) that hides the substrate (402) and has a sparkling metallic appearance; and a colored liquid intermediate coating composition comprising a colored pigment or dye dispersed in a second hardenable binder, wherein application of the intermediate coating composition to the reflective colored layer provides a further colored layer (510) that increases the color saturation of incident light reflected from the reflective colored layer.

Fig. 5

**Description**

**Field**

This invention relates to metallic paint finishes and their repair.

**Background**

Metallic paints have long been a popular option in automobiles, motorcycles, bicycles and other articles. A typical metallic paint system is normally applied in multiple layers including a primer layer containing one or more adhesion-promoting additives and a filler dispersed in a binder; a base coat layer containing one or more colored pigments and small sparkling metal flakes dispersed in a paint binder; and a clear topcoat layer containing one or more UV absorbers dissolved in a transparent paint binder.

"Candy coat" finishes initially appeared on motorcycles and hot rods, and are now available on many automobiles. Compared to a conventional metallic paint finish, a candy coat finish provides an enhanced metallic effect having increased apparent depth and color intensity. Candy coat finishes typically are prepared by applying atop a primer layer a nontransparent base coat layer containing metallic aluminum flakes overcoated with multiple (*e.g.,* three, four or more) coats of a translucent colored coating containing a dye dispersed in a transparent paint binder, followed by application of a conventional clear topcoat layer. The translucent colored coats typically are applied in layers and merge to form a single colored layer, sometimes referred to as the "candy", having substantially greater thickness (*e.g.*, at least twice the thickness) of the base coat layer and greater color intensity than would be attained by using only one or two coats of the translucent colored coating material. The overall thickness of the translucent colored layer affects both the apparent color and color depth of the completed candy coat finish, and thus careful thickness control during application is necessary in order to obtain a uniform final appearance. Thickness control can be improved by employing very careful, consistent control of application parameters (*e.g.*, spraying parameters) for each individually applied colored coat. For example, when the finish is applied by spraying, exemplary such parameters include the spray nozzle to substrate distance, the angle of the applied spray with respect to the substrate, the spray nozzle lateral traversal rate over the substrate, and the coverage in overlapped areas where the spray nozzle reverses direction or makes multiple parallel passes to cover a large area. For candy coat finishes applied in an automotive original equipment manufacturing (OEM) setting, robotically-operated electrostatic spraying equipment is normally used with careful adjustment of all spraying parameters so as to attain a uniform translucent colored layer thickness and uniform finished coating appearance over the whole of the finished component part or finished automobile,

Aftermarket repair of candy color finishes is very difficult. As discussed in more detail below, aftermarket repair often involves the use of a semitransparent metallic base layer rather than the nontransparent metallic aluminum flake layer employed in OEM finishes. If the thicknesses of the semitransparent base layer and the above-mentioned translucent colored layers are not adequately controlled, then a poor color match between an OEM-finished area and a refinished area may arise. Also, a mottled appearance may be noticeable across the refinished area. Such defects can result in customer complaints and rework. In some instances insurers have written off or "totaled" an otherwise repairable automobile merely because an adequate match between a refinished area and the OEM candy color finish could not be attained.

From the foregoing, it will be appreciated that what is needed in the art are improved aftermarket repair methods for candy color finishes. Such repair methods, their associated refinishing compositions, and associated OEM paint finishes are disclosed and claimed herein.

**Summary of the Invention**

The present invention provides, in one aspect, a method for candy color metallic paint finish repair, the method comprising steps of:

    a. applying to a substrate (*e.g.*, a primed substrate) a colored liquid base coating composition comprising a colored metal oxide-coated nontransparent silver dollar aluminum flake pigment, and optionally one or more additional colored pigments or dyes, dispersed in a first hardenable binder;
    b. at least partially hardening the base coating composition to form a reflective colored base layer that hides the substrate and has a sparkling metallic appearance;
    c. applying to the at least partially hardened reflective colored base layer a colored liquid intermediate coating composition comprising a colored pigment or dye dispersed in a second hardenable binder;
    d. at least partially hardening the intermediate coating composition to form a colored intermediate layer that increases the color saturation of incident light reflected from the reflective colored base layer;

e. optionally applying to the at least partially hardened intermediate layer a liquid clearcoat composition comprising a transparent third hardenable binder; and

f. hardening the applied compositions to provide a multilayer candy color metallic finish.

The present invention provides, in another aspect, a method for repairing a candy color metallic paint finish on a portion of an article, the method comprising steps of:

a. providing an article having a hardened candy color metallic paint finish comprising a base layer containing aluminum flake pigment dispersed in a first hardened binder and having a sparkling metallic appearance, the base layer being overcoated with a translucent colored layer containing a dye dispersed in a second hardened binder and having a thickness at least twice that of the base layer;

b. repairing the candy color finish on a portion and less than all of such article by applying to such portion or a replacement part corresponding to such portion a colored liquid base coating composition comprising a colored metal oxide-coated nontransparent silver dollar aluminum flake pigment and one or more additional colored pigments or dyes having a hue like that of the translucent colored layer, dispersed in a first hardenable binder;

c. at least partially hardening the base coating composition to form a reflective colored base layer that hides such portion or replacement part and has a sparkling metallic appearance;

d. optionally applying to the at least partially hardened colored base layer a colored liquid intermediate coating composition comprising a colored pigment or dye dispersed in a second hardenable binder and at least partially hardening the intermediate coating composition to form a colored intermediate layer that increases the color saturation of incident light reflected from the reflective colored base layer;

e. optionally applying to the at least partially hardened intermediate layer a liquid clearcoat composition comprising a transparent third hardenable binder; and

f. hardening the applied compositions to provide a multilayer candy color metallic finish.

The invention provides, in another aspect, a candy color paint metallic finishing system comprising:

a. a colored liquid base coating composition comprising a colored metal oxide-coated nontransparent silver dollar aluminum flake pigment, and optionally one or more additional colored pigments or dyes, dispersed in a first hardenable binder, wherein application of the base coating composition to a substrate provides a reflective colored layer that hides the substrate and has a sparkling metallic appearance; and

b. a colored liquid intermediate coating composition comprising a colored pigment or dye dispersed in a second hardenable binder, wherein application of the intermediate coating composition to the reflective colored layer provides a further colored layer that increases the color saturation of incident light reflected from the reflective colored layer.

The invention provides, in yet another aspect, a painted article comprising a metal, polymeric or composite substrate overcoated with a hardened candy color metallic coating composition comprising:

a. a substrate (*e.g.*, a primed substrate);

b. a reflective colored base layer atop the substrate, the base layer comprising a colored metal oxide-coated nontransparent silver dollar aluminum flake pigment, and optionally one or more additional colored pigments or dyes, dispersed in a first hardened binder, and having a sparkling metallic appearance;

c. a further colored intermediate layer atop the reflective colored base layer, the intermediate layer comprising a colored pigment or dye dispersed in a second hardened binder, wherein the intermediate layer increases the color saturation of incident light reflected from the reflective colored base layer; and

d. optionally a clearcoat layer comprising a transparent third hardened binder atop the intermediate layer.

The above-mentioned primer and clearcoat are both optional but are each preferred. If a clearcoat is not employed, then the intermediate layer may serve as the uppermost layer in the paint finish. In such case the term "intermediate layer" may be replaced by the term "topcoat layer" so as to avoid an implication that a further layer is present atop the intermediate layer.

The disclosed method, paint finishing system and coated article facilitate the application of candy color paint finishes and the repair or refinishing of candy color painted articles.

**Brief Description of the Drawing**

3

**Fig. 1** is a perspective view of an automobile;

**Fig. 2** is a perspective view of a plastic front bumper cover for the **Fig. 1** automobile;

**Fig. 3** is a cross-sectional schematic view of a conventional OEM candy color finish on a curved plastic substrate;

**Fig. 4** is a cross-sectional schematic view of a conventional aftermarket candy color paint finish repair on the **Fig. 3** substrate;

**Fig. 5** is a cross-sectional schematic view of an improved aftermarket candy color paint finish repair on the **Fig. 3** substrate;

**Fig. 6** is a cross-sectional schematic view of the **Fig. 5** finish; and

**Fig. 7** is a schematic side view showing illumination and measurement angles.

Like reference symbols in the various figures of the drawing indicate like elements. The elements in the drawing are not to scale.

**Detailed Description**

The recitation of a numerical range using endpoints includes all numbers subsumed within that range (*e.g.*, 1 to 5 includes 1, 1.5, 2, 2.75, 3, 3.80, 4, 5, etc.).

The terms "a," "an," "the," "at least one," and "one or more" are used interchangeably. Thus, for example, a finish described as having "a" base coating layer has "one or more" such base coating layers.

The term "binder" means a film-forming natural or synthetic polymer suitable for use in a primer, paint or clearcoat.

The term "chroma" means the radial component $C^*$ of the cylindrical coordinate representation (*viz.*, CIELCh) of the CIE 1976 ($L^*,a^*,b^*$) color space. In more general terms, chroma denotes the extent of colorfulness or color saturation relative to the brightness of a similarly illuminated area that appears to be white or highly transmitting.

The term "colored" when used with respect to a primer or paint means having a color other than white, gray or black, *e.g.*, having a hue such as red, green, blue or yellow. In other words, having a color with a distinct, non-zero chroma value $C^*$.

The term "flake" when used with respect to a coated aluminum pigment refers to generally flat, thin high aspect ratio (*e.g.*, 10:1 or more) particles having much greater length and width than thickness. Coated flake pigments include so-called "silver dollar" and "cornflake" shapes, with silver dollar pigments having a generally smooth surface and cornflake pigments having an appreciably less smooth surface. Silver dollar pigments may be flat or slightly curved (*e.g.*, lenticular or biconvex) and may have smooth edges. Cornflake pigments may have a more severe curvature (*e.g.*, saddle-shaped, dished or otherwise appreciably curved) and more roughened edges.

The term "hiding power" when used with respect to an applied and dried or cured layer of a pigment-containing coating composition means that the dried or cured layer contains sufficient nontransparent pigment and has sufficient layer thickness so as to obscure or substantially obscure an underlying layer. Hiding power may be measured according to ASTM method D-2805, using dried drawdowns on Form 3B Leneta charts prepared at a 0.1 mm wet film thickness, to assess whether the applied coating layer will obscure the black portion of the Leneta chart sufficiently so that the coating lightness value $L^*$ over the black portion of the Leneta chart is at least a specified percentage of the coating lightness value $L^*$ over the white portion of the chart. Exemplary hiding power percentages may for example be at least 90%, at least 95% or at least 98% of such coating lightness value $L^*$ over the white portion of the chart.

The term "hue" when used with respect to a pigment or an applied coating composition means having a color that would be perceived by an ordinary observer as being within the same color region in the CIELab color as a primary hue such as red, green, blue, yellow, orange or violet.

The term "mottle" (also referred to as cloudiness) when used with respect to an applied paint finish means having one or more areas with an uneven color (*e.g.*, differing lightness or differing hues), uneven reflectivity (*e.g.*, differing gloss or differing sparkle as the viewing angle is changed) or other visibly objectionable appearance differences that would be unacceptable to an ordinary consumer seeking repair of a damaged vehicle. Mottle may for example manifest itself as a blotchy, patchy or streaky appearance at one or more viewing angles. Mottle may be measured by making repeated color measurements at a variety of observation angles using a multi-angle spectrophotometer such as the BYK-mac™ instrument from BYK-Gardner, GmbH, and statistically analyzing the variance of the measurements after correcting for measurement error variance.

The terms "polymer" and "polymeric" include polymers as well as copolymers of two or more monomers.

The terms "preferred" and "preferably" refer to embodiments of the invention that may afford certain benefits, under certain circumstances. However, other embodiments may also be preferred, under the same or other circumstances. Furthermore, the recitation of one or more preferred embodiments does not imply that other embodiments are not useful, and is not intended to exclude other embodiments from the scope of the invention.

The term "solvent-borne" when used in respect to a coating composition means that the major liquid carrier for such coating composition is a nonaqueous solvent or mixture of nonaqueous solvents.

The term "vehicle" refers to a device used to transport people or objects, *e.g.*, a car, bus, truck, motorcycle, train, tram, ship, boat, aircraft or spacecraft.

The term "water-borne" when used in respect to a coating composition means that the major liquid carrier for such coating composition is water.

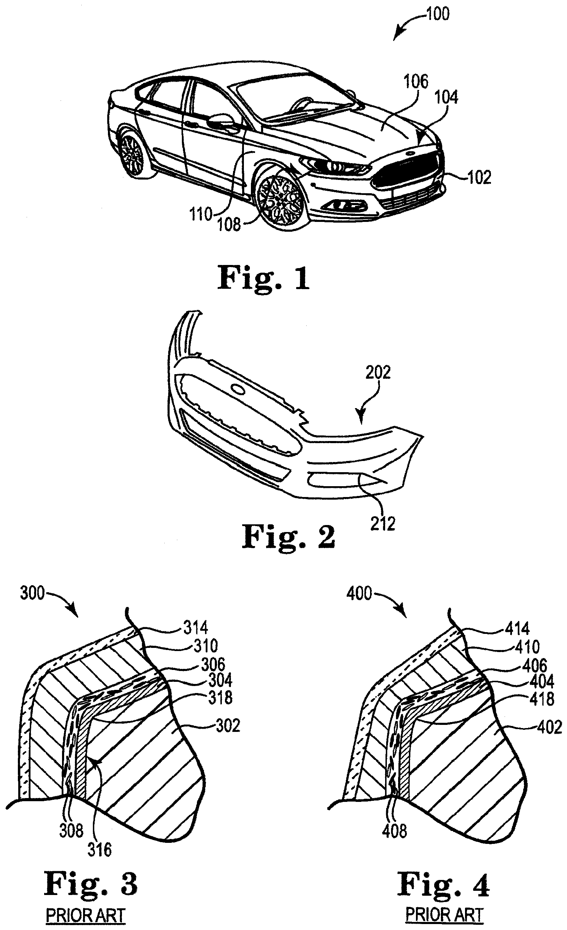

Referring to **Fig. 1** and **Fig. 2,** vehicle **100** includes a series of adjacent body panels or other parts which in a typical vehicle may be made from a variety of substrate materials (*e.g.*, steel, aluminum and plastic). Front bumper **102** typically is a relatively easily removable and replaceable part made from a molded thermoplastic. Seams, edges and other contour-defining features on bumper **102** separate bumper **102** from adjacent painted surfaces or other nearby parts on the body of vehicle **100**. For example, panel gap **104** separates bumper **102** from hood **106,** and mating seam **108** separates bumper **102** from front fender **110**. Vehicle **100** typically is initially painted in a factory using robotically-controlled electrostatic spray equipment that has been carefully programmed by the vehicle manufacturer to apply well-controlled, consistent paint layers to vehicle **100** with a visually uniform overall appearance across each painted body part and visually imperceptible differences between adjacent painted body parts.

In a very common accident scenario, bumper **102** may become scraped, cracked, dented or otherwise damaged in a collision or other mishap. Repairs typically involve the removal and if need be disposal or recycling of bumper **102,** and its repainting or if need be its replacement with a new part such as bumper **202** in **Fig. 2**. Bumper **202** typically will be supplied in unpainted or primed form. Prior to reinstallation of a repaired bumper **102** or new bumper **202** on vehicle **100,** the bumper must be painted to match, to the best achievable extent, the OEM finish on adjacent portions of vehicle **100**. The following discussion will concentrate on the steps taken in connection with new bumper **202,** it being understood that similar steps may be employed when it is possible to instead repair and refinish original bumper **102**.

In addition to matching the adjacent paint finish near boundaries such as panel gap **104** and seam **108,** the completed paint finish on bumper **202** should also have a visually uniform overall appearance across bumper **202** itself. Doing so can be difficult, especially when the part to be painted has a compound surface with severe localized curvature at character lines or edges such as turning light assembly border **212**.

**Fig. 3** shows a cross-sectional schematic view of a conventional OEM candy color finish on painted part **300**. Part **300** includes thermoplastic substrate **302**, primer layer **304,** base layer **306** containing aluminum metal flakes **308,** candy color intermediate coat layer **310** and clearcoat **314**. The portion of substrate **302** shown in **Fig. 3** has a curved outer surface **316** including edge **318,** which may for example be a feature such as border **212** in **Fig. 2** or any of the other numerous character lines, cutouts, strakes, outside edges, interior openings, ridges or other features that may be present on a typical vehicle or other painted article. Primer layer **304** may be colored or colorless, for example a colorless primer in a hue such as white, gray or black. The aluminum flakes **308** in base layer **306** typically are plain (*viz.,* uncoated) aluminum flakes that are relatively low in cost compared to coated metallic pigments, and consequently such plain flakes may be used in the large quantities required for OEM paint finish application without contributing unduly to the cost of the completed automobile. Typically, the base layer in such an OEM candy color finish does not employ a separate colored pigment. Flakes **308** typically are present in sufficient concentration in base layer **306** so as to provide a final finish having a sparkling, "metal effect" appearance (*viz.,* the sparkling appearance associated by a typical automotive consumer with an OEM metallic vehicular paint finish). The high hiding properties of aluminum flake pigments also typically ensure that base layer **306** will hide primer layer **304** sufficiently so that the color if any of primer layer **304** will not be visible through base layer **306**.

Candy color layer **310** typically is formed by applying several (*e.g.*, 3, 4, 5 or more) layers in a carefully (*e.g.* robotically) controlled fashion so as to provide an overall layer **310** with uniform, monolithic and substantial thickness across flat or only mildly curved areas on part **300** as well as over more severely curved portions such as edge **318**. The thickness of layer **310** typically is at least twice and may be as many as 3, 4, 5 or more times the thickness of layer **306**. The individual applied layers from which candy color layer **310** is formed normally each contain the same formulation. The formulation typically contains one or more dyes in a transparent binder, with the overall layer thickness and dye amount in candy color layer **310** being sufficient so that layer **310** will impart sufficient color saturation, apparent color depth and the desired candy color appearance to the completed paint finish, while at the same time remaining sufficiently transparent to incident light such that the metallic sparkle effect in the layer **306** remains visible. Transparent topcoat **314** typically contains a transparent binder and optional additives, and may for example include UV absorbers, hardening agents, defoamers and other standard coating composition adjuvants so as to provide a smooth, blemish-free glossy finish that can protect the underlying layers from damage including mild impact, abrasion, solvents and the effects of outdoor weathering.

**Fig. 4** shows a cross-sectional schematic view of a conventional candy color finish aftermarket repair on painted part **400**. Part **400** includes thermoplastic substrate **402**, colored primer layer **404,** base layer **406** containing mainly a non-colored sparkling effect pigment such as mica flakes **408,** candy color intermediate coat layer **410** and clearcoat **414**. Primer layer **404** and base layer **406** usually have a materially different construction than the corresponding OEM paint layers **304** and **306** depicted in **Fig. 3**. In a typical candy coat paint finish repair, primer layer **404** is a colored primer whose hue approximates the hue of the desired candy color finish on the original vehicle (for example, a red-hued primer for use in repairing a red-hued candy color finish, a yellow-hued primer for use in repairing a yellow-hued candy color finish and so on). Base layer **406** typically employs a transparent or semitransparent pigment rather than a nontransparent pigment, and has a thickness and pigment content, such that layer **406** is non-hiding and the color in primer **404** will be visible through base layer **406**. This approach helps enhance the apparent color depth of the completed paint finish repair and allows the color in primer layer **404** to contribute to the final finish color. Layer **406** typically is applied in a single coat or with a low layer thickness, and as depicted in **Fig. 4** has a uniform thickness. It can however be difficult to achieve such uniform thickness. In the completed finish, incident light will travel through layer **406** to be partially absorbed by and partially reflected by colored primer layer **404,** and then will pass back through layer **406**. Consequently, small variations in the thickness of layer **406** may cause large variations in the apparent color of layer **404** and thereby contribute to or cause mottle in the completed finish.

Candy color intermediate coat layer **410** has an average thickness significantly greater than the thickness of layer **406**. As depicted in **Fig. 4,** layer **410** also has a non-uniform thickness, as manifested for example by the reduced coating thickness region above edge **418** and the greater coating thickness regions in areas laterally displaced from edge **418**. Such non-uniform thickness regions typically arise due to the difficulties that may be experienced by a painter tasked with manually applying the multiple layers that form candy color layer **410,** e.g., over portions of substrate **402** having a curved surface and especially over portions such as edge **418** having a severely curved surface. Attaining a uniform thickness typically requires maintenance by the painter of a uniform angle (e.g., a normal angle) between the spray nozzle and substrate, a constant spray nozzle to substrate distance, a constant lateral traversal rate whenever paint is being applied, and the avoidance of uneven overlaps between successive spray patterns (e.g., at the end of each spray stroke and when making multiple parallel passes over large areas). These difficulties may be accentuated when painting large panels having complex compound or concave shapes or areas of sharp curvature, and may be further accentuated when applying multiple coats in order to attain a thick overall combined coating layer. The resulting thickness differences in layer **410** can further contribute to or cause mottling in the completed finish. In addition, because the final coating color and visual impression will be due to the combined effect of at least two different light transmissive layers (viz., layers **406** and **410**), then there may be increased sensitivity to the thickness of the individual layers.

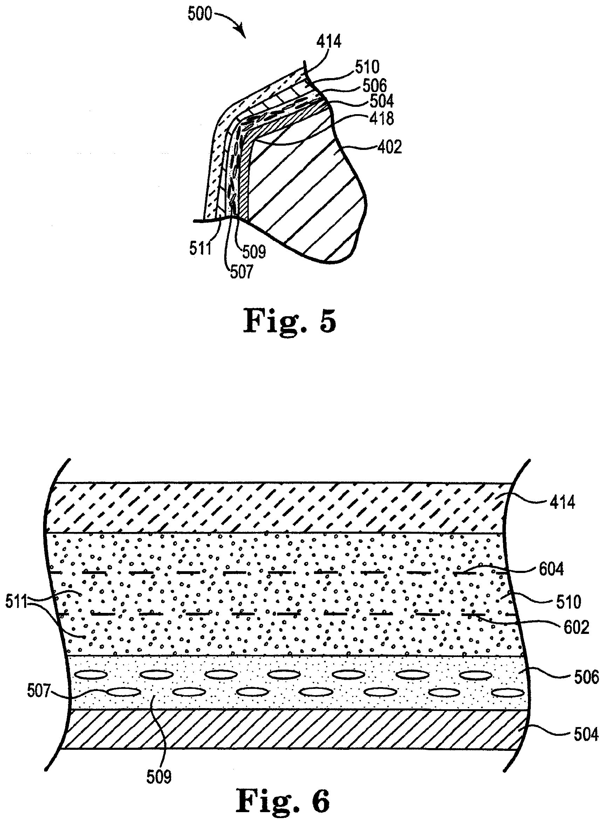

**Fig. 5** and **Fig. 6** show a cross-sectional schematic view of a candy color finish aftermarket repair applied according to the presently-disclosed method on painted part **500**. Part **500** includes thermoplastic substrate **402**, primer layer **504**, base layer **506** containing a colored metal oxide-coated nontransparent silver dollar aluminum flake pigment **507** and optionally one or more additional colored pigments such as pigment **509,** candy color intermediate coat layer **510** and clearcoat **414**. Primer layer **504** may be colorless (for example, like primer layer **304**) or colored (for example, like primer layer **404**), and typically will be well hidden due to the hiding properties of layer **506** even when primer layer **504** is colored. In a typical repair, base layer **506** will also contain additional colored pigments such as pigment **509**. Such additional pigments typically are added to provide an improved match to the target OEM finish. They may also help concentrate the apparent color in the base layer and thereby enable the use of a candy color layer **510** having reduced coloration or reduced thickness,

In some embodiments, a further improved match to the target OEM finish may be attained by applying candy color layer **510** in multiple coats so as to form a layer having increased thickness, e.g., greater thickness than that of layer **506**. The individual coats typically will be allowed to dry (e.g., to flash dry) but not harden prior to the application of subsequent coats. Subsequent coats may if desired be applied without such flash drying, via a wet-on-wet application technique, provided that sufficient care is taken to avoid runs and overlaps. Dashed lines **602** and **604** in **Fig. 6** show the individual intermediate coat layers which merge to form layer **510**.

As depicted in **Fig. 5,** candy color layer **510** has a greater thickness than layer **508**. This is not however required. In a preferred embodiment, the pigment or dye loading levels in layer **510** are reduced relative to the levels that might be used in a conventional candy coat finish, and the majority of the paint finish contribution to color saturation comes from layer **506**.

Owing in part to the high chroma and good hiding characteristics of pigment **507** in base layer **506,** and also owing to the reduced pigment or dye loading levels that may be used in layer **510,** the impact of thickness variations in candy color layer **510** may be reduced, with a corresponding reduced likelihood that painted part **500** will exhibit objectionable mottle or not adequately match the OEM finish on the remainder of vehicle **100**.

A variety of substrates may be painted with the disclosed coating compositions, including metals such as aluminum, brass, copper, iron, pot metal, steel, tin and zinc; thermoplastic polymers such as vinyl (PVC), polystyrene (PS), thermoplastic polyolefins (TPO) such as polyethylene (PE) and polypropylene (PP), acrylonitrile-butadiene-styrene (ABS), polycarbonate (PC), nylon, polyesters such as polyethylene terephthalate (PET), copolyesters, and other thermoplastics that will be familiar to persons having ordinary skill in the art; thermoset polymers such as cyanate ester resins, epoxy resins, melamine resins, phenol-formaldehyde resins, polyimide resins, urea-formaldehyde resins, vulcanized rubbers and other thermoset polymers that will be familiar to persons having ordinary skill in the art; and composites including those made by combining any of the above-mentioned thermoplastic or thermoset polymers with fillers, strands or woven or nonwoven webs made from suitable reinforcing materials including fiberglass (e.g., composites made by pultrusion), natural fibers (*e.g.,* cotton fibers or wood fibers), natural fabrics, carbon fibers (*e.g.,* in laid mat carbon fiber composites or in carbon fiber-reinforced plastics), and other composite reinforcing materials that will be familiar to persons having ordinary skill in the art. The substrate may be a replacement part (for example, a part such as bumper **202**), or may be an original part of vehicle **100** (for example bumper **102,** hood **106** or fender **110**) from which some or all of the OEM paint finish has been removed as a part of a spot repair that is blended into the OEM finish on the remainder of such part.

The substrate ordinarily will be supplied in primed form or may be coated with a suitable primer. Unprimed substrates may be used in some applications but may offer reduced durability, and consequently the presence of a primer is preferred. A variety of primers may be employed and will be familiar to persons having ordinary skill in the art. Unlike conventional candy color repair procedures, the presently disclosed method does not require a colored primer, and as noted above may instead employ a colorless primer. The disclosed method may also or instead employ a colored primer whose hue would not normally be suitable for conventional repair of the chosen OEM candy color. The primer may accordingly be selected based primarily on performance factors such as adhesion and durability, without regard to its appearance. The primer typically will contain a hardenable film-forming binder in an optional vehicle. Exemplary binders include solvent borne or waterborne one-component (physical drying) polymers or resins, and multicomponent curable binders that cure or harden due to a chemical reaction. Representative binders include but are not limited to acrylic copolymers, styrene/acrylic copolymers, vinyl acetate copolymers, vinyl acetate/acrylic copolymers, vinyl versatic acid ester/acrylic copolymers, ethylene/vinyl acetate copolymers, styrene/butadiene copolymers, polyester polymers, drying oil modified polymers such as polyesters and polyurethanes, polyamides, epoxy esters, polyureas, polyurethanes, polysiloxanes, silicones, fluorinated copolymers such as vinylidene fluoride, and blends of any of the above polymeric binders. The binder may be an electrostatically-applied binder (*e.g.,* a cathodic electodepositable binder), or may be a multicomponent (*e.g.,* two component) chemically-cured reactive system such as an isocyanate-polyamine, isocyanate-polyol, epoxy-polyamine, acryloyl-malonate, carbodiimide-polyacid, carbonate-polyamine, aldehyde-carbamate, aminofunctional silicon-epoxy, aziridine-polyacid, melamine-polyol, or urea formaldehyde-polyol system. The binder may also or instead be a curable system that hardens by exposure to light (e.g., UV light) or other radiant energy in the presence of a suitable catalyst or initiator. Exemplary hardenable binders are described for example in U.S. Patent Nos. 6,165,621 (Kasari et al.) and 7,947,777 B2 (Haubennestel et al.).

The primer may be applied in one or more coats, using a variety of techniques and equipment that will be familiar to persons having ordinary skill in the art, including spraying (*e.g.*, air-assisted, airless or electrostatic spraying), brushing, roller coating, flood coating and dipping. In an embodiment, the primer is applied as a plurality of layers having different compositions, for example as an uncolored layer overcoated with a colored layer. The primer may be applied at a variety of film thicknesses, in one or more coats. Preferably the wet film thickness and number of coats are such as to provide an overall dried primer film thickness of at least about 12, at least about 15, or at least about 20 $\mu$m and up to about 150, up to about 100 or up to about 80 $\mu$m, for example a dried primer film thickness of about 60 $\mu$m obtained by applying two primer coats each at a coating weight sufficient to provide a 30 $\mu$m dried film thickness. The applied primer composition may be cured by allowing it to air dry or by accelerating curing using a variety of drying devices (*e.g.*, ovens) that will be familiar to persons having ordinary skill in the art.

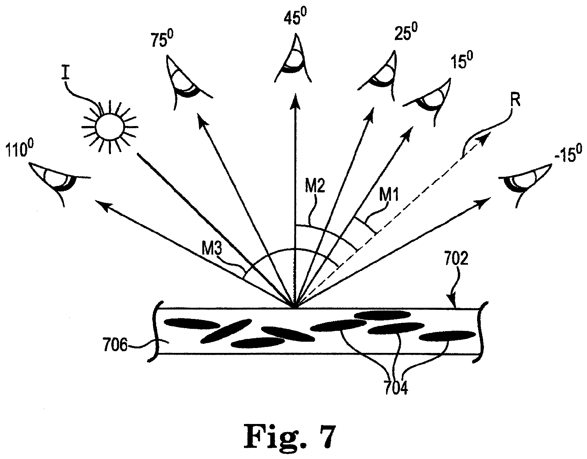

As noted above, the base coating composition contains a colored metal oxide-coated nontransparent silver dollar aluminum flake pigment and optionally one or more additional colored pigments or dyes, dispersed in a first hardenable binder. The thickness of the metal oxide coating may for example be controlled by the aluminum flake supplier so as to impart angle-dependent coloration, via one or more of interference phenomena, reflection phenomena or absorption phenomena, to light reflected from the aluminum flake substrate. The metal oxide coating preferably covers all surfaces including edges of the aluminum flakes. Exemplary metal oxides typically have relatively high refractive indices, and include iron oxides (*e.g.* ferric oxide), titanium oxides (*e.g.* titanium dioxide), titanium oxynitrides and other metal oxides that will be familiar to persons having ordinary skill in the art. Combinations of metal oxide layers, or combinations of a metal oxide layer and other layers, may be employed on the aluminum flake substrate. For example, the substrate may be coated with alternating layers of a high refractive index metal oxide and a low refractive index material such as silicon dioxide, magnesium fluoride and other compounds that will be familiar to persons having ordinary skill in the art. The colored metal oxide-coated nontransparent silver dollar aluminum flakes may for example have aspect ratios of at least 20:1 or at least 30:1 and less than 150:1 or less than 100:1. A variety of colored metal oxide-coated nontransparent silver dollar aluminum flake pigment are commercially available, including pigments in the PALIOCROM™ BRILLIANT series from BASF such as PALIOCROM Sparkling Red L 3505, PALIOCROM Brilliant Orange L 2850 and PALIOCROM Brilliant Gold L 2050; pigments in the MEOXAL™ series from EMD Performance Materials and Merck KGaA such as MEOXAL Altacama Red, MEOXAL Taklamakan Gold and Wahiba Orange; and (for interior use or other applications in which exposure to weather may not be an issue) pigments in the METAX CHROMA™ series from Toyal Europe such as CRS CPK 20-XZ Gold, CRS RPK 20-XZ Dark Orange, CRS GR 20-XZ Light Blue, CRS TGR 20-XZ Light Blue, CRS BL 20-XZ Violet, CRS MBL 20-XZ Dark Blue, CRS OR 20-XZ Light Green, CRS GD 20-XZ Green and CRS RE 20-XZ Dark Violet; and the pigments in US 7,828,890B2 (Henglein et al.). The pigment flakes have a so-called "silver dollar" configuration, and may for example have an average particle diameter of at least about 5, at least about 10 or at least about 15 $\mu$m and up to about 100, up to about 80 or up to about 40 $\mu$m. For a so-called "full shade" composition in which the colored metal oxide-coated nontransparent silver dollar aluminum flake pigment is the only pigment present, and containing sufficient pigment at a sufficient coating thickness to provide a hiding power of at least 98%, the pigment may for example have a lightness value greater than 70, greater than 80, greater than 85, greater than 90, greater than 95 or greater than 100, and a chroma value greater than 80, greater than 85, greater than 90, greater than 95, greater than 100, greater than 105 or greater than 110, as evaluated using face view, illumination **I** and measurement angle **M$_1$** which is at 15° with respect to the specular reflection ray **R** shown in **Fig. 7**. **Fig. 7** also shows in schematic view a full shade coating **702** containing silver dollar aluminum pigment flakes **704** in a hardened binder **706**. Expressed on a dried solid weight basis, the colored metal oxide-coated nontransparent silver dollar aluminum flake pigment may for example represent at least about 0.1, at least about 0.5 or at least about 1 wt. percent and up to about 20, up to about 15 or up to about 10 wt. percent of the base coating layer. In some embodiments, the colored metal oxide-coated nontransparent silver dollar aluminum flake pigment represents a majority by weight of the pigment up to all of the pigment present in the base coating composition.

A variety of colored pigments or dyes may be added to the base coating composition to provide additional color beyond that already provided by the colored metal oxide-coated nontransparent silver dollar aluminum flake pigment. Such additional colored pigments or dyes are also useful in order better to match a variety of target OEM finishes. This arises in part because OEM candy color finishes typically do not receive their coloration from their aluminum flake pigment and thus some adjustment may be needed to mimic or match the light management behavior of the OEM finish. Also, suitable colored metal oxide-coated nontransparent silver dollar aluminum flake pigments are typically only available in a few individual hues, whereas OEM candy color finishes typically are available in a variety of hues (*viz.*, various red hues, blue hues and so on) that nonetheless may need to differ from the candy color finishes of competing manufacturers. Exemplary such colored pigments or dyes include naturally occurring or synthetic pigments based on metals, metal salts and metal oxides, organometallic compounds that can be dispersed in the base coating composition, and naturally occurring or synthetic dyes based on organic compounds that can be dissolved in the base coating composition. Exemplary metals include aluminum powders, bronze powders, copper powders, tin powders and zinc powders. Exemplary metal salts or metal oxides include titanium dioxide, iron oxide powders, iron phosphate powders and oxide-coated (*e.g.*, titanium oxide-coated) mica particles. Other exemplary pigments or dyes include carbon black, phthalocyanine blue, phthalocyanine green, carbazole violet, anthrapyridine, azo orange, flavanthrone yellow, isoindoline yellow, azo yellow, indanthrone blue, dibromoanthanthrone red, perylene red, azo red, anthraquinone red and quinacridone red. Non-infrared-absorptive dark pigments like those described in U.S. Patent No. 8,746,291 B2 (Hertz et al.) may also be employed. In a preferred embodiment, the added pigments or dyes include at least one pigment or dye having a hue similar to that of the above-described colored metal oxide-coated nontransparent silver dollar aluminum flake pigment and enabling an improved match to the OEM paint finish compared to the repaired finish that might be obtained in the absence of such added pigment or dye. Expressed on a dried solid weight basis, the added pigments or dyes may for example represent at least about 0.1, at least about 0.5 or at least about 1 wt. percent and up to about 20, up to about 15 or up to about 10 wt. percent of the base coating layer. Preferably the total amount of colorants (*viz.*, colored metal oxide-coated nontransparent silver dollar aluminum flake pigment and added pigment or dye) in the base coating composition is at least about 0.1, at least about 0.5 or at least about 1 wt. percent and up to about 20, up to about 15 or up to about 10 wt. percent of the base coating layer dried solids. Also, preferably the total amount of such colorants and the dried coating thickness for the hardened base layer are sufficient to provide a hiding power of at least about 90%, at least about 95% or at least about 98% when evaluated using ASTM method D-2805 as discussed above.

Extender pigments may be added to the base coating composition but in general are not required. Exemplary extender pigments include precipitated barium sulfate, barium carbonate, gypsum, clay, silica, white carbon, diatomaceous earth, talc, magnesium carbonate, alumina white and mica powders.

A variety of hardenable binders may be employed in the disclosed base layer composition, and include waterborne polymers and solution polymers like those discussed above in connection with the primer. Preferred binders include polyol-polyisocyanate, epoxy-amine, acryloyl-malonate, carbodiimide-polyacid and carbonate-polyamine systems. Expressed on a dried solids weight basis, the binder may for example represent at least about 60, at least about 70 or at least about 80 wt. percent and up to about 95, up to about 98 or up to about 99 wt. percent of the base coating layer.

The base coating composition will contain a suitable volatile carrier, *e.g.*, water in a waterborne composition and one or more solvents in a solvent-borne composition. Cosolvents may also be employed in waterborne or solvent-borne compositions. Exemplary carriers and cosolvents will be familiar to persons having ordinary skill in the art. Expressed on a weight basis, the base coating composition may for example contain at least about 50 or at least about 60 wt. percent and up to about 90 or up to about 85 wt. percent total carrier and cosolvent based on the total liquid coating composition weight.

The base coating composition may contain one or more conventional coating composition adjuvants that will be familiar to persons having ordinary skill in the art. Waxes, and especially waxes that serve as flop additives modifying the color appearance of the base layer, represent a preferred adjuvant. If used, waxes may for example represent on a dry solids basis at least about 0.1 or at least about 05. wt. %, and up to about 10 or up to about 5 wt. % of the base layer. Exemplary other adjuvants that may be used include anti-cratering agents, biocides, coalescents, curing indicators, dispersants, fungicides, heat stabilizers, leveling agents, light stabilizers, mildewcides, optical brighteners, plasticizers, preservatives, surfactants, thickeners or other rheology modifiers, ultraviolet light absorbers and wetting agents. Representative adjuvants include those described in Koleske et al., Paint and Coatings Industry, April, 2003, pages 12-86. The types and amounts of such other adjuvants typically will be empirically selected.

The base coating composition may be applied at a variety of film thicknesses, in one or more coats, using techniques and equipment like those discussed above in connection with the primer. Preferably the wet film thickness and number of coats are such as to provide an overall dried base coat thickness of at least about 12 $\mu$m or at least about 15 $\mu$m and up to about 50 $\mu$m or up to about 30 $\mu$m, for example a dried base layer thickness of about 20 $\mu$m obtained by applying two base layer coats each at a coating weight sufficient to provide a 10 $\mu$m dried film thickness. The applied base layer may be cured by allowing it to air dry or by accelerating curing using devices like those discussed above in connection with the primer.

As mentioned above, the colored liquid intermediate coating composition contains a colored pigment or dye dispersed in a second hardenable binder. The second hardenable binder may be the same as or may be different from the first hardenable binder. Exemplary binders include those discussed above in connection with the primer and base coating composition. Exemplary pigments and dyes for use in the intermediate coating composition include the added pigments or dyes discussed above in connection with the base coating composition. In a preferred embodiment, the intermediate coating composition includes at least one pigment or dye having a hue similar to that of the above-described aluminum pigment flakes. The intermediate coating composition pigment or dye preferably provides color depth, a candy coat appearance and an improved match to the OEM paint finish compared to the repaired finish that might be obtained in the absence of such pigment or dye. The intermediate coating composition typically will also contain a carrier like those discussed above, and may also contain adjuvants like those discussed above. The concentrations of pigment or dye, binder and carrier in the intermediate coating layer preferably are adjusted to provide good color saturation, appropriate film thickness build up, ease of application on complex substrates, a short drying time, and sufficient transparency or translucency so that the metallic appearance of the base coat can be seen through the intermediate layer. Doing so typically is aided by employing a composition having a viscosity sufficient to provide easy application, for example a viscosity suitable for spraying using air-assisted or electrostatic spraying equipment. In preferred embodiments, the pigment or dye concentration in the intermediate layer is less than that typically employed in the candy layer of an OEM finish or aftermarket repair finish, and color saturation in the final paint finish is provided primarily by colorants in the base layer rather than by colorants in the candy layer. Expressed on a dried solid weight basis, the pigments or dyes may for example represent up to about 5, up to about 2 or up to about 1 wt. percent of the intermediate coating layer.

The intermediate coating composition may be applied at a variety of film thicknesses, in one or more coats, using techniques and equipment like those discussed above in connection with the primer. Preferably the wet film thickness and number of coats are such as to provide an overall dried intermediate coat thickness of at least about 12 $\mu$m or at least about 15 $\mu$m and up to about 100 $\mu$m or up to about 50 $\mu$m, for example a dried intermediate layer thickness of about 20 $\mu$m obtained by applying two intermediate coats each at a coating weight sufficient to provide a 10 $\mu$m dried film thickness. The applied intermediate coats may be cured by allowing them to air dry or by accelerating curing using devices like those discussed above in connection with the primer and base coating composition.

As mentioned above, the optional (but preferred) clearcoat contains a transparent third hardenable binder. The third hardenable binder may be the same as or different from the first and second hardenable binders. Exemplary clearcoat binders include those discussed above in connection with the primer, base coating composition and intermediate coating composition, with polyol-polyisocyanate, epoxy-amine and acryloyl-malonate systems being preferred. A variety of clearcoats may be employed and will be familiar to persons having ordinary skill in the art. The clearcoat may be applied at a variety of film thicknesses, in one or more coats, using techniques and equipment like those discussed above in connection with the primer, base coating composition and intermediate coating composition. Preferably the wet film thickness and number of coats are such as to provide an overall dried clearcoat thickness of at least about 20 $\mu$m and up to about 150 $\mu$m or up to about 80 $\mu$m, for example a clearcoat thickness of about 60 $\mu$m obtained by applying two coats each at a coating weight sufficient to provide a 30 $\mu$m dried film thickness. The clearcoat may be cured by allowing it to air dry or by accelerating curing using devices like those discussed above in connection with the primer, base coating composition and intermediate coating composition.

The primer, base coating composition, intermediate coating composition and clearcoat may be packaged in any convenient packaging suitable for storing a desired quantity of the coating composition without premature gelation, undue separation or other undesirable degradation during storage. Exemplary packaging containers include cans, pails, bottles, drums, totes and tanks. The paint system may if desired be supplied without including conventional components such as the primer or clearcoat. For example, the base coating composition and intermediate coating composition may be supplied to an end-user (*e.g.*, a painter) in the form of two ready-mixed compositions designed to be sold and used together to match a particular finish (*e.g.,* a particular automotive make, model, year and color). A paint manufacturer may also supply to a point-of-sale outlet such as a paint store a set of several base coating compositions and several intermediate coating compositions that may each be combined with separately-added colorants (also referred to as toners) and mixed to provide a custom-made paint system for matching a variety of candy color finishes (*e.g.,* candy color finishes for a variety of vehicle makes, models and years).

In addition to using the disclosed paint finishing system to repair of a portion of an article (*e.g.,* a vehicle) so as to match an OEM candy coat finish on the remainder of the article, the paint finishing system may also be used as an OEM finish applied in a factory setting. The reduced sensitivity of the disclosed paint finish system to variations in thickness of the intermediate coating may provide an advantage in certain OEM applications, such as in the painting of components with severe curvature or complex shapes, where it may be difficult even with robotically-controlled spray equipment to attain uniform coating thicknesses and a mottle-free candy coat finish.

The present invention also discloses the following embodiments:

1. A method for candy color metallic paint finish repair, the method comprising steps of:

a. applying to a substrate (*e.g.,* a primed substrate) a colored liquid base coating composition comprising a colored metal oxide-coated nontransparent silver dollar aluminum flake pigment, and optionally one or more additional colored pigments or dyes, dispersed in a first hardenable binder;
b. at least partially hardening the base coating composition to form a reflective colored base layer that hides the substrate and has a sparkling metallic appearance;
c. applying to the at least partially hardened reflective colored base layer a colored liquid intermediate coating composition comprising a colored pigment or dye dispersed in a second hardenable binder;
d. at least partially hardening the intermediate coating composition to form a colored intermediate layer that increases the color saturation of incident light reflected from the reflective colored base layer;
e. optionally applying to the at least partially hardened intermediate layer a liquid clearcoat composition comprising a transparent third hardenable binder; and
f. hardening the applied compositions to provide a multilayer candy color metallic finish.

2. A method for repairing a candy color metallic paint finish on a portion of an article, the method comprising steps of:

a. providing an article having a hardened candy color metallic paint finish comprising a base layer containing aluminum flake pigment dispersed in a first hardened binder and having a sparkling metallic appearance, the base layer being overcoated with a translucent colored layer containing a dye dispersed in a second hardened binder and having a thickness at least twice that of the base layer;
b. repairing the candy color finish on a portion and less than all of such article by applying to such portion or a replacement part corresponding to such portion a colored liquid base coating composition comprising a colored metal oxide-coated nontransparent silver dollar aluminum flake pigment and one or more additional colored pigments or dyes having a hue like that of the translucent colored layer, dispersed in a first hardenable binder;
c. at least partially hardening the base coating composition to form a reflective colored base layer that hides such portion or replacement part and has a sparkling metallic appearance;
d. optionally applying to the at least partially hardened colored base layer a colored liquid intermediate coating composition comprising a colored pigment or dye dispersed in a second hardenable binder and at least partially hardening the intermediate coating composition to form a colored intermediate layer that increases the color saturation of incident light reflected from the reflective colored base layer;
e. optionally applying to the at least partially hardened intermediate layer a liquid clearcoat composition comprising a transparent third hardenable binder; and
f. hardening the applied compositions to provide a multilayer candy color metallic finish.

3. A candy color paint metallic finishing system comprising:

a. a colored liquid base coating composition comprising a colored metal oxide-coated nontransparent silver dollar aluminum flake pigment, and optionally one or more additional colored pigments or dyes, dispersed in a first hardenable binder, wherein application of the base coating composition to a substrate provides a reflective colored layer that hides the substrate and has a sparkling metallic appearance; and
b. a colored liquid intermediate coating composition comprising a colored pigment or dye dispersed in a second hardenable binder, wherein application of the intermediate coating composition to the reflective colored layer provides a further colored layer that increases the color saturation of incident light reflected from the reflective colored layer.

4. A painted article comprising a metal, polymeric or composite substrate overcoated with a hardened candy color metallic coating composition comprising:

    a. a substrate;
    b. a reflective colored base layer atop the substrate, the base layer comprising a colored metal oxide-coated nontransparent silver dollar aluminum flake pigment, and optionally one or more additional colored pigments or dyes, dispersed in a first hardened binder, and having a sparkling metallic appearance;
    c. a further colored intermediate layer atop the reflective colored base layer, the intermediate layer comprising a colored pigment or dye dispersed in a second hardened binder, wherein the intermediate layer increases the color saturation of incident light reflected from the reflective colored base layer; and
    d. optionally a clearcoat layer comprising a transparent third hardened binder atop the intermediate layer.

5. A method according to item 1 or item 2, system according to item 3 or article according to item 4 wherein the aluminum flake pigment is iron oxide-coated.

6. A method according to item 1 or item 2, system according to item 3 or article according to item 4 wherein the aluminum flake pigment has an average particle diameter of about 5 to about 80 $\mu$m.

7. A method according to item 1 or item 2, system according to item 3 or article according to item 4 wherein for a composition in which the colored metal oxide-coated nontransparent silver dollar aluminum flake pigment is the only pigment present, and containing sufficient pigment at a sufficient coating thickness to provide a hiding power of at least 98%, the pigment has a lightness value greater than 70 and a chroma value greater than 80 as evaluated using face view, illumination at 45° to normal, and measurement at 15° to the specular reflection angle.

8. A method, system or article according to item 7 wherein the pigment has a lightness value greater than 85.

9. A method, system or article according to item 7 wherein the pigment has a lightness value greater than 100.

10. A method, system or article according to item 7 wherein the pigment has a chroma value greater than 90.

11. A method, system or article according to item 7 wherein the pigment has a chroma value greater than 110.

12. A method according to item 1 or item 2, system according to item 3 or article according to item 4 wherein the aluminum flake pigment is a red-hued pigment.

13. A method according to item 1 or item 2, system according to item 3 or article according to item 4 wherein the aluminum flake pigment is a gold-hued pigment.

14. A method according to item 1 or item 2, system according to item 3 or article according to item 4 wherein the aluminum flake pigment is an orange-hued pigment.

15. A method according to item 1 or item 2, system according to item 3 or article according to item 4 wherein the aluminum flake pigment is about 0.1 to about 20 wt. % of the base coating layer expressed on a dry solids basis.

16. A method according to item 1 or item 2, system according to item 3 or article according to item 4 wherein the aluminum flake pigment is about 1 to about 10 wt. % of the base coating layer expressed on a dry solids basis.

17. A method according to item 1 or item 2, system according to item 3 or article according to item 4 wherein the base coating layer contains about 0.1 to about 20 wt. % additional pigment or dye expressed on a dry solids basis.

18. A method according to item 1 or item 2, system according to item 3 or article according to item 4 wherein the base coating layer contains about 0.5 to about 10 wt. % additional pigment or dye expressed on a dry solids basis.

19. A method, system or article according to item 18 wherein the additional pigment or dye has the same hue as that of the colored aluminum flake pigment.

20. A method according to item 1 or item 2, system according to item 3 or article according to item 4 wherein the base coating composition is waterborne.

21. A method according to item 1 or item 2, system according to item 3 or article according to item 4 wherein the base coating composition is solvent-borne.

22. A method according to item 1 or item 2 or article according to item 4 wherein the base coating composition has a dry film thickness of about 12 to about 50 $\mu$m.

23. A method according to item 1 or item 2, system according to item 3 or article according to item 4 wherein the intermediate coating composition contains up to about 5 wt. % pigment or dye expressed on a dry solids basis.

24. A method according to item 1 or item 2, system according to item 3 or article according to item 4 wherein the intermediate coating composition contains up to about 2 wt. % pigment or dye expressed on a dry solids basis.

25. A method, system or article according to item 24 wherein the intermediate coating composition pigment or dye has the same hue as that of the colored aluminum flake pigment.

26. A method according to item 1 or item 2, system according to item 3 or article according to item 4 wherein the intermediate coating composition has a red hue.

27. A method according to item 1 or item 2, system according to item 3 or article according to item 4 wherein the intermediate coating composition has a gold or yellow hue.

28. A method according to item 1 or item 2, system according to item 3 or article according to item 4 wherein the intermediate coating composition has an orange hue.

29. A method according to item 1 or item 2, system according to item 3 or article according to item 4 wherein the intermediate coating composition has a blue hue.

30. A method according to item 1 or item 2 wherein the intermediate coating composition is applied in one or two layers.

31. A method according to item 1 or item 2 wherein the intermediate coating composition is applied in three or more layers.

32. A method according to item 1 or item 2 or article according to item 4 wherein the intermediate coating composition has a dry film thickness of about 12 to about 50 $\mu$m.

33. A method according to item 1 or item 2 or article according to item 4 wherein the substrate or portion comprises a part of or for a vehicle.

34. A method or article according to item 33 wherein the vehicle is an automobile.

The invention is further illustrated in the following non-limiting examples, in which all parts and percentages are by weight unless otherwise indicated.

**Example 1**

Aftermarket painters have found it very difficult to duplicate current candy color metallic red OEM finishes from Ford, Mazda and Renault via the conventional repair technique shown in FIG. 4. Waterborne base coat and intermediate coat formulations for use in repairing these finishes were prepared by mixing a waterborne 15.9 % solids polyester binder containing no pigment with waterborne dispersions of various pigments in the same binder. The completed formulations contained the pigment types and amounts shown below in Table 1 through Table 3. The Table 1 base coat also contained 3.03 wt.% of a waterborne 26.2 % solids wax dispersion.

**Table 1**

| Ford Laser Red Pearl Metallic (Color Code E9-6688) | | |
|---|---|---|
| **Pigment Class** | **Pigment Description** | **Wt. % of Non-Volatile Materials** |
| **Base Coat** | | |
| Iron Oxide-Coated Aluminum Flakes | PALIOCROM Sparkling Red L 3505 | 1.02 |
| PR264 | DPP Red Transparent | 0.99 |
| PR122 | Quinacridone Magenta | 0.71 |
| Mica | Mica Red FE Fine | 0.69 |
| PR179 | Perylene Maroon | 0.10 |
| **Total Pigment** | | 3.52 |
| **Intermediate Coat** | | |
| PR179 | Perylene Maroon | 0.14 |
| **Total Pigment** | | 0.14 |

**Table 2**

| Mazda Soul Red Metallic (Color Code 41V) | | |
|---|---|---|
| **Pigment Class** | **Pigment Description** | **Wt. % as a % of Non-Volatilc Materials** |
| **Base Coat** | | |
| Iron Oxide-Coated Aluminum Flakes | PALIOCROM Sparkling Red L 3505 | 2.12 |
| PR264 | DPP Red Transparent | 0.34 |
| PR122 | Quinacridone Magenta | 0.21 |
| PR179 | Perylene Maroon | 0.96 |
| **Total Pigment** | | 3.64 |
| **Intermediate Coat** | | |
| PR179 | Perylene Maroon | 0.06 |
| PR122 | Quinacridone Magenta | 0.05 |
| **Total Pigment** | | 0.11 |

**Example 3**

**Renault Rouge Flamme Metallic (Color Code NNP)**

| **Pigment Class** | **Pigment Description** | **Wt. % as a % of Non-Volatile Materials** |
|---|---|---|
| **Base Coat** | | |
| Iron Oxide-Coated Aluminum Flakes | PALIOCROM Sparkling Red L 3505 | 2.88 |
| PR179 | Perylene Maroon | 0.28 |
| PR224 | Perylene Anhydride Red | 0.28 |
| PR264 | DPP Red Transparent | 0.22 |

(continued)

| Pigment Class | Pigment Description | Wt. % as a % of Non-Volatile Materials |
|---|---|---|
| **Base Coat** | | |
| PR254 | DPP Red BO | 0.05 |
| **Total Pigment** | | 3.71 |
| **Intermediate Coat** | | |
| PR179 | Perylene Maroon | 0.08 |
| PR224 | Perylene Anhydride Red | 0.29 |
| **Total Pigment** | | 0.37 |

**Comparison Example 1**

Waterborne aftermarket paint refinishing systems for use in repairing the above-mentioned Ford, Mazda and Renault candy color metallic red OEM finishes were formulated using the waterborne polyester binder employed in Example 1 and the pigment types and amounts shown below in Table 4 through Table 6. The Ford and Renault systems employed nontransparent uncolored aluminum flake pigments and did not require a colored primer. The Mazda system employed red mica flake and nontransparent uncolored aluminum flake pigments, and was used with a colored primer formulated using the waterborne polyester binder employed in Example 1 and the pigment types and amounts shown below in Table 5. The Table 4 and Table 5 base coats also respectively contained 17.93 wt. % and 4.45 wt. % of a waterborne 26.2 % solids wax dispersion.

**Table 4**

| Ford Laser Red Pearl Metallic (Color Code E9-6688) | | |
|---|---|---|
| **Pigment Class** | **Pigment Description** | **Wt. % of Non-Volatile Materials** |
| **Base Coat** | | |
| Aluminum | Disoriented Aluminum Flakes | 3.78 |
| PR224 | Perylene Anhydride Red | 0.10 |
| PW006 | Titanium Dioxide White | 0.30 |
| PR122 | Quinacridone Magenta | 0.07 |
| **Total Pigment** | | 4.25 |
| **Intermediate Coat** | | |
| PR179 | Perylene Maroon | 0.90 |
| PR264 | DPP Red Transparent | 0.06 |
| PR122 | Quinacridone Magenta | 0.15 |
| PV019 | Quinacridone Violet | 0.09 |
| **Total Pigment** | | 1.21 |

**Table 5**

| Mazda Soul Red Metallic (Color Code 41V) | | |
|---|---|---|
| **Pigment Class** | **Pigment Description** | **Wt. % as a % of Non-Volatile Materials** |
| **Primer** | | |
| PR101 | Iron Oxide Red Opaque | 5.34 |
| PV019 | Quinacridone Violet | 0.92 |

(continued)

| Mazda Soul Red Metallic (Color Code 41V) | | |
|---|---|---|
| **Pigment Class** | **Pigment Description** | **Wt. % as a % of Non-Volatile Materials** |
| **Primer** | | |
| PBK007 | Carbon Black | 0.02 |
| **Total Pigment** | | 6.28 |
| **Base Coat** | | |
| Mica | Mica FE Red | 2.51 |
| Aluminum | Disoriented Aluminum Flakes | 0.65 |
| PR179 | Perylene Maroon | 0.89 |
| PR264 | DPP Red Transparent | 0.29 |
| **Total Pigment** | | 4.33 |
| **Intermediate Coat** | | |
| PR179 | Perylene Maroon | 0.48 |
| PV019 | Quinacridone Violet | 0.05 |
| **Total Pigment** | | 0.53 |

## Example 6

**Renault Rouge Flamme Metallic (Color Code NNP)**

| **Pigment Class** | **Pigment Description** | **Wt. % as a % of Non- Volatile Materials** |
|---|---|---|
| **Base Coat** | | |
| Aluminum | Coarse Aluminum Flakes | 3.19 |
| PY139 | Benzimidolone Yellow | 0.44 |
| PR264 | DPP Red Transparent | 0.11 |
| **Total Pigment** | | 3.75 |
| **Intermediate Coat** | | |
| PR224 | Perylene Anhydride Red | 0.33 |
| PR179 | Perylene Maroon | 0.54 |
| **Total Pigment** | | 0.87 |

## Example 2

**Paint Repairs**

Repair finishes were applied to primed panels using the base coat and intermediate coat formulations shown in Table 1 through Table 3 and a conventional clearcoat. The base coat formulations were applied in two coats each having a wet coating weight sufficient to give a 10 μm thick dried film, for a total dried base coat thickness of 20 μm. The intermediate coat formulations were similarly applied. The clearcoat formulation was applied in two coats each having a wet coating weight sufficient to give a 30 μm thick dried film, for a total clearcoat thickness of 60 μm. The repair finishes had uniform coloration, no visible mottle, and provided a very good visual match for the corresponding OEM metallic candy coat finishes.

Repair finishes were also applied to primed panels using the comparison formulations shown in Table 4 through Table 6 and a conventional clearcoat at the same thicknesses used for the disclosed method, *viz.,* a 20 $\mu$m base coat and intermediate coat thickness and the 30 $\mu$m clearcoat thickness. The Mazda primer was applied using two primer coats each at a coating weight sufficient to provide a 30 $\mu$m dried film thickness.

The color of each repair panel was measured by capturing the reflection spectra with a multi-angle spectrophotometer using illumination **I** and the 15°, 45° and 110° measurement angles $M_1$, $M_2$ and $M_3$ shown in **Fig. 7.** The measured spectral data was converted into CIELab L*, a* and b* values using CIE Standard Illuminant D65. The color match accuracy was evaluated by calculating the Euclidean color difference $\Delta E_{ab}$ (*viz.,* the so-called CIE76 color difference) for the repaired panel $L_1$*, $a_1$* and $b_1$* values compared to the OEM finish $L_2$*, $a_2$* and $b_2$* values using the formula:

$$\Delta E_{ab}^* = \sqrt{(L_2^* - L_1^*)^2 + (a_2^* - a_1^*)^2 + (b_2^* - b_1^*)^2}$$

The $\Delta E_{ab}$ results for panels repaired according to the disclosed method and repaired using the comparison formulations are set out below in Table 7 through Table 9. Table 8 also shows the results obtained for the Mazda finish when the Table 2 base coat layer was employed but the Table 2 intermediate coat layer was omitted.

**Table 7**

| Ford Laser Red Pearl Metallic (Color Code E9-6688) | | | |
|---|---|---|---|
| **Substrate** | $\Delta E_{ab}$, **15°** | $\Delta E_{ab}$, **45°** | $\Delta E_{ab}$, **110°** |
| **OEM Panel** | 0.00 | 0.00 | 0.00 |
| **Panel Repair Using Table 1 Basecoat and Intermediate Coat** | 11.89 | 5.99 | 4.23 |
| **Conventional Repair Using Table 4 Basecoat and Intermediate Coat** | 15.77 | 6.32 | 5.14 |

The results in Table 7 show a substantial improvement in $\Delta E_{ab}$ values at all three measurement angles compared to the results obtained using the conventional repair technique. The conventional procedure required greater care when applying the candy layer than was needed when applying the intermediate layer using the presently disclosed method. This was due in part to the significantly higher pigment loading levels for the intermediate layers used in the conventional repairs versus the intermediate layers used in the disclosed repairs (*viz.,* 1.21 wt. % vs. 0.14 wt. % for the intermediate layers used to repair the Ford finish; 0.53 wt. % vs. 0.11 wt. % for the intermediate layers used to repair the Mazda finish; and 0.87 wt. % vs. 0.37 wt. % for the intermediate layers used to repair the Renault finish). Such higher pigment loading levels cause variations in the layer thickness to have a more noticeable effect on the final finish color and appearance, e.g., for factors such as the extent of metallic sparkle.

**Table 8**

| Mazda Soul Red Metallic (Color Code 41V) | | | |
|---|---|---|---|
| **Substrate** | $\Delta E_{ab}$, **15°** | $\Delta E_{ab}$, **45°** | $\Delta E_{ab}$, **110°** |
| **OEM Panel** | 0.00 | 0.00 | 0.00 |
| **Panel Repair Using Table 2 Basecoat and Intermediate Coat** | 7.16 | 6.21 | 4.70 |
| **Panel Repair Using Table 2 Basecoat** | 9.72 | 9.52 | 4.40 |
| **Conventional Repair Using Table 5 Primer, Basecoat and Intermediate Coat** | 12.93 | 10.32 | 3.50 |

The results in Table 8 show a substantial improvement in $\Delta E_{ab}$ values at 15° and 45° compared to the results obtained using the conventional repair technique. Use of both the basecoat layer and intermediate coat layer also provided an improvement at 15° and 45° compared to the results obtained using only the basecoat layer. At 110°, a slightly lower $\Delta E_{ab}$ value was obtained using the conventional repair technique, but the difference was small and the $\Delta E_{ab}$ values were moreover sufficiently close to the OEM panel value so that an average consumer would regard the repair panel and OEM finish as having the same appearance at a 110° observation angle. The conventional procedure required greater care when applying the candy layer than was needed when applying the intermediate layer using the presently disclosed method.

**Table 9**

| Renault Rouge Flamme Metallic (Color Code NNP) | | | |
|---|---|---|---|
| Substrate | $\Delta E_{ab}$, 15° | $\Delta E_{ab}$, 45° | $\Delta E_{ab}$, 110° |
| OEM Panel | 0.00 | 0.00 | 0.00 |
| Panel Repair Using Table 3 Basecoat and Intermediate Coat | 7.91 | 4.51 | 1.95 |
| Conventional Repair Using Table 6 Basecoat and Intermediate Coat | 9.01 | 3.86 | 0.44 |

The results in Table 9 show a substantial improvement in $\Delta E_{ab}$ values at 15° compared to the results obtained using the conventional repair technique. At 45° and 110°, slightly lower $\Delta E_{ab}$ values were obtained using the conventional repair technique, but the differences were small and the $\Delta E_{ab}$ values were moreover sufficiently close to the OEM panel values so that an average consumer would regard the repair panel and OEM finish as having the same appearance at 45° and 110° observation angles. The conventional procedure required greater care when applying the candy layer than was needed when applying the intermediate layer in the presently disclosed method.

Having thus described preferred embodiments of the present invention, those of skill in the art will readily appreciate that the present teachings may be applied to yet other embodiments within the scope of the attached claims. The complete disclosures of any patents, patent documents, or other publications referred to herein are incorporated by reference as if individually set forth.

**Claims**

1. A candy color paint metallic finishing system comprising:

   a. a colored liquid base coating composition comprising a colored metal oxide-coated nontransparent silver dollar aluminum flake pigment, and optionally one or more additional colored pigments or dyes, dispersed in a first hardenable binder, wherein application of the base coating composition to a substrate provides a reflective colored layer that hides the substrate and has a sparkling metallic appearance; and
   b. a colored liquid intermediate coating composition comprising a colored pigment or dye dispersed in a second hardenable binder, wherein application of the intermediate coating composition to the reflective colored layer provides a further colored layer that increases the color saturation of incident light reflected from the reflective colored layer.

2. A method for candy color metallic paint finish repair, the method comprising steps of:

   a. applying to a substrate (e.g., a primed substrate) a colored liquid base coating composition comprising a colored metal oxide-coated nontransparent silver dollar aluminum flake pigment, and optionally one or more additional colored pigments or dyes, dispersed in a first hardenable binder;
   b. at least partially hardening the base coating composition to form a reflective colored base layer that hides the substrate and has a sparkling metallic appearance;
   c. applying to the at least partially hardened reflective colored base layer a colored liquid intermediate coating composition comprising a colored pigment or dye dispersed in a second hardenable binder;
   d. at least partially hardening the intermediate coating composition to form a colored intermediate layer that increases the color saturation of incident light reflected from the reflective colored base layer;
   e. optionally applying to the at least partially hardened intermediate layer a liquid clearcoat composition comprising a transparent third hardenable binder; and
   f. hardening the applied compositions to provide a multilayer candy color metallic finish.

3. A method for repairing a candy color metallic paint finish on a portion of an article, the method comprising steps of:

   a. providing an article having a hardened candy color metallic paint finish comprising a base layer containing aluminum flake pigment dispersed in a first hardened binder and having a sparkling metallic appearance, the base layer being overcoated with a translucent colored layer containing a dye dispersed in a second hardened binder and having a thickness at least twice that of the base layer;
   b. repairing the candy color finish on a portion and less than all of such article by applying to such portion or a replacement part corresponding to such portion a colored liquid base coating composition comprising a colored metal oxide- coated nontransparent silver dollar aluminum flake pigment and one or more additional colored pigments or dyes having a hue like that of the translucent colored layer, dispersed in a first hardenable binder;

c. at least partially hardening the base coating composition to form a reflective colored base layer that hides such portion or replacement part and has a sparkling metallic appearance;

d. optionally applying to the at least partially hardened colored base layer a colored liquid intermediate coating composition comprising a colored pigment or dye dispersed in a second hardenable binder and at least partially hardening the intermediate coating composition to form a colored intermediate layer that increases the color saturation of incident light reflected from the reflective colored base layer;

e. optionally applying to the at least partially hardened intermediate layer a liquid clearcoat composition comprising a transparent third hardenable binder; and

f. hardening the applied compositions to provide a multilayer candy color metallic finish.

4. A painted article comprising a metal, polymeric or composite substrate overcoated with a hardened candy color paint metallic finishing system as defined in claim 1 , the article comprising:

a. a substrate;

b. a reflective colored base layer atop the substrate, the base layer comprising a colored metal oxide-coated nontransparent silver dollar aluminum flake pigment, and optionally one or more additional colored pigments or dyes, dispersed in a first hardened binder, and having a sparkling metallic appearance;

c. a further colored intermediate layer atop the reflective colored base layer, the intermediate layer comprising a colored pigment or dye dispersed in a second hardened binder, wherein the intermediate layer increases the color saturation of incident light reflected from the reflective colored base layer; and

d. optionally a clearcoat layer comprising a transparent third hardened binder atop the intermediate layer.

5. A system according to claim 1, method according to claim 2 or claim 3 or article according to claim 4 wherein the aluminum flake pigment is iron oxide-coated.

6. A system according to claim 1, method according to claim 2 or claim 3 or article according to claim 4 wherein the aluminum flake pigment has an average particle diameter of about 5 to about 80 $\mu$m.

7. A system according to claim 1, method according to claim 2 or claim 3 or article according to claim 4 wherein for a composition in which the colored metal oxide-coated nontransparent silver dollar aluminum flake pigment is the only pigment present, and containing sufficient pigment at a sufficient coating thickness to provide a hiding power of at least 98%, the pigment has a lightness value greater than 70 and a chroma value greater than 80 as evaluated using face view, illumination at 45° to normal, and measurement at 15° to the specular reflection angle, and wherein the pigment preferably has a lightness value greater than 85 or greater than 100 and/or wherein the pigment preferably has a chroma value greater than 90 or greater than 110.

8. A system according to claim 1, method according to claim 2 or claim 3 or article according to claim 4 wherein the aluminum flake pigment is selected from a red-hued pigment, a gold-hued pigment, and an orange-hued pigment.

9. A system according to claim 1, method according to claim 2 or claim 3 or article according to claim 4 wherein the aluminum flake pigment is about 0.1 to about 20 wt. % of the base coating layer expressed on a dry solids basis, or wherein the aluminum flake pigment is about 1 to about 10 wt. % of the base coating layer expressed on a dry solids basis.

10. A system, method or article according to claim 4, wherein the base coating layer contains about 0.5 to about 10 wt. % additional pigment or dye expressed on a dry solids basis and wherein the additional pigment or dye has the same hue as that of the colored aluminum flake pigment.

11. A system according to claim 1, method according to claim 2 or claim 3 or article according to claim 4 wherein the intermediate coating composition contains up to about 5 wt. % pigment or dye expressed on a dry solids basis, or up to about 2 wt. % pigment or dye expressed on a dry solids basis.

12. A system according to claim 1, method according to claim 2 or claim 3 or article according to claim 4 wherein the intermediate coating composition has a hue selected from: a red hue; a gold or yellow hue; an orange hue; a blue hue.

13. A method according to claim 2 or claim 3 wherein the intermediate coating composition is applied in one or two; or three or more layers.

14. A method according to claim 2 or claim 3 or article according to claim 4 wherein the intermediate coating composition has a dry film thickness of about 12 to about 50 $\mu$m.

15. A method according to claim 1 or claim 2 or article according to claim 4 wherein the substrate or portion comprises a part of or for a vehicle, and wherein the vehicle is preferably an automobile.

**Fig. 1**

**Fig. 2**

**Fig. 3**
PRIOR ART

**Fig. 4**
PRIOR ART

**Fig. 5**

**Fig. 6**

Fig. 7

Europäisches
Patentamt

European
Patent Office

Office européen
des brevets

# EUROPEAN SEARCH REPORT

Application Number

EP 21 18 0117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/104874 A1 (OGAWA TAKESHI [JP] ET AL) 10 May 2007 (2007-05-10)<br>* abstract *<br>* paragraphs [0001], [0002], [0029], [0037], [0038], [0044], [0045], [0053] - [0055], [0066], [0067], [0077], [0080], [0082] - [0085], [0089], [0092] * | 1-15 | INV.<br>B05D5/00<br>B05D5/06<br>B05D7/00<br><br>ADD.<br>B05D7/14 |
| X | JP 2015 187247 A (KANSAI PAINT CO LTD) 29 October 2015 (2015-10-29)<br>* paragraphs [0001], [0020], [0021], [0024], [0047] - [0050], [0116] - [0121], [0128], [0129], [0140] - [0142] *<br>* table 3 * | 1-15 | |
| A | JP H11 142244 A (NIPPON PAINT CO LTD) 28 May 1999 (1999-05-28)<br>* abstract *<br>* paragraphs [0001], [0018], [0039] * | 1-15 | |
| X<br>A | US 2015/322284 A1 (SERDIUK PAUL [US]) 12 November 2015 (2015-11-12)<br>* abstract *<br>* paragraphs [0001], [0016], [0035] - [0038], [0043], [0044] * | 1,3-15<br>2 | **TECHNICAL FIELDS SEARCHED (IPC)**<br>B05D |
| A | Takuyaki Nakao: "Interference Colored Aluminium Pigment",<br>,<br>24 December 2014 (2014-12-24), pages 1-2, XP055404465,<br>Retrieved from the Internet:<br>URL:http://www.toyal.co.jp/eng/tech_report/pdf/powder_paste/tr_pwpt2012_010.pdf<br>[retrieved on 2017-09-07]<br>* the whole document * | 1-15 | |

-/--

The present search report has been drawn up for all claims

| Place of search | Date of completion of the search | Examiner |
|---|---|---|
| The Hague | 1 October 2021 | Grave, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 21 18 0117

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/028823 A1 (DUTT WILFRIED [DE]) 12 February 2004 (2004-02-12) * paragraphs [0001], [0023], [0025], [0028], [0029], [0036], [0037], [0039], [0040], [0087] * * examples 2,4 * | 1-15 | |
| X | JP 2013 040293 A (KANSAI PAINT CO LTD) 28 February 2013 (2013-02-28) * paragraphs [0001], [0010], [0011], [0035], [0037], [0038], [0083], [0084] * | 1-15 | |
| A,P | Anonymous: "What is the Difference Between Candy, Pearl, and Metallic Paint? ¦ Eastwood Blog", , 14 April 2020 (2020-04-14), XP055846501, Retrieved from the Internet: URL:https://garage.eastwood.com/eastwood-chatter/what-is-the-difference-between-candy-pearl-and-metallic-paint/ [retrieved on 2021-10-01] * section "What is Candy Paint?" * | 1-15 | |

| | | | TECHNICAL FIELDS SEARCHED (IPC) |
|---|---|---|---|

The present search report has been drawn up for all claims

| Place of search | Date of completion of the search | Examiner |
|---|---|---|
| The Hague | 1 October 2021 | Grave, Christian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 21 18 0117

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2021

| Patent document cited in search report | | Publication date | Patent family member(s) | | Publication date |
|---|---|---|---|---|---|
| US 2007104874 | A1 | 10-05-2007 | AT | 423631 T | 15-03-2009 |
| | | | CA | 2524775 A1 | 09-12-2004 |
| | | | EP | 1628780 A1 | 01-03-2006 |
| | | | EP | 2045022 A1 | 08-04-2009 |
| | | | EP | 2045023 A1 | 08-04-2009 |
| | | | US | 2007104874 A1 | 10-05-2007 |
| | | | WO | 2004105965 A1 | 09-12-2004 |
| JP 2015187247 | A | 29-10-2015 | JP | 6468544 B2 | 13-02-2019 |
| | | | JP | 2015187247 A | 29-10-2015 |
| JP H11142244 | A | 28-05-1999 | NONE | | |
| US 2015322284 | A1 | 12-11-2015 | CN | 106459623 A | 22-02-2017 |
| | | | EP | 3140354 A1 | 15-03-2017 |
| | | | JP | 2017520638 A | 27-07-2017 |
| | | | KR | 20170007332 A | 18-01-2017 |
| | | | US | 2015322284 A1 | 12-11-2015 |
| | | | US | 2017066935 A1 | 09-03-2017 |
| | | | WO | 2015169502 A1 | 12-11-2015 |
| US 2004028823 | A1 | 12-02-2004 | AT | 333954 T | 15-08-2006 |
| | | | AU | 2003259069 A1 | 25-02-2004 |
| | | | BR | 0313350 A | 12-07-2005 |
| | | | CA | 2494966 A1 | 19-02-2004 |
| | | | CN | 1675002 A | 28-09-2005 |
| | | | DE | 60307116 T2 | 15-02-2007 |
| | | | EP | 1545800 A1 | 29-06-2005 |
| | | | JP | 4596912 B2 | 15-12-2010 |
| | | | JP | 2005535442 A | 24-11-2005 |
| | | | KR | 20050026557 A | 15-03-2005 |
| | | | MX | PA05001463 A | 06-06-2005 |
| | | | TW | 200414939 A | 16-08-2004 |
| | | | US | 2004028823 A1 | 12-02-2004 |
| | | | WO | 2004014572 A1 | 19-02-2004 |
| JP 2013040293 | A | 28-02-2013 | CN | 102952445 A | 06-03-2013 |
| | | | JP | 5674592 B2 | 25-02-2015 |
| | | | JP | 2013040293 A | 28-02-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6165621 A, Kasari
- US 7947777 B2, Haubennestel
- US 7828890 B2, Henglein
- US 8746291 B2, Hertz

**Non-patent literature cited in the description**

- **KOLESKE et al.** *Paint and Coatings Industry,* April 2003, 12-86